# EUROPEAN PATENT APPLICATION

(11) **EP 1 704 828 A1**
(43) Date of publication of application: **27.09.2006**
(21) Application number: 05005436.0
(22) Date of filing: 12.03.2005
(51) Int. Cl.: A61C 5/09, A61C 5/08, A61C 13/265

(54) **Set of modular inner crowns, outer crowns and abutment conformation device for dental restorations**

(71) Applicant: Wu, Wen-Yuen, Zuoying District Kaohsiung City 813 (TW)
(72) Inventor: Wu, Wen-Yuen, Zuoying District Kaohsiung City 813 (TW)
(74) Representative: Helms, Joachim

(57) **Abstract**

A method is designed to mount a removable restoration tooth on a natural tooth to be restored comprising the use of the modular inner crowns corresponding to the permanent teeth of a human, the modular outer crowns corresponding to the modular inner crowns, and the modular abutment conformation devices corresponding to the plastic inner crowns; by this way has the advantages including the formation of the abutment of a natural abutment tooth to be restored is so streamlined as to enhance the efficiency of the dental treatment.

## Description

### FIELD OF THE INVENTION

The present invention relates to a dental method of mounting a detachable restoration tooth on an abutment tooth, and more particularly to a method of mounting a detachable restoration tooth by using a modular set of inner crown units, outer crown units, and device units which are used for abutment conformation.

### BACKGROUND OF THE PRESENT INVENTION

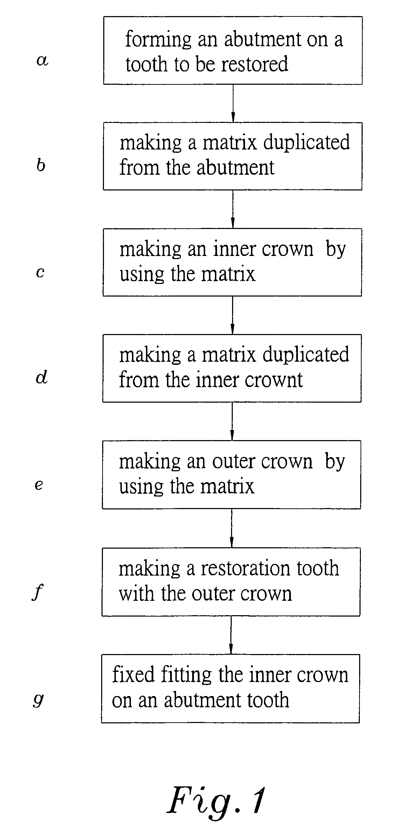

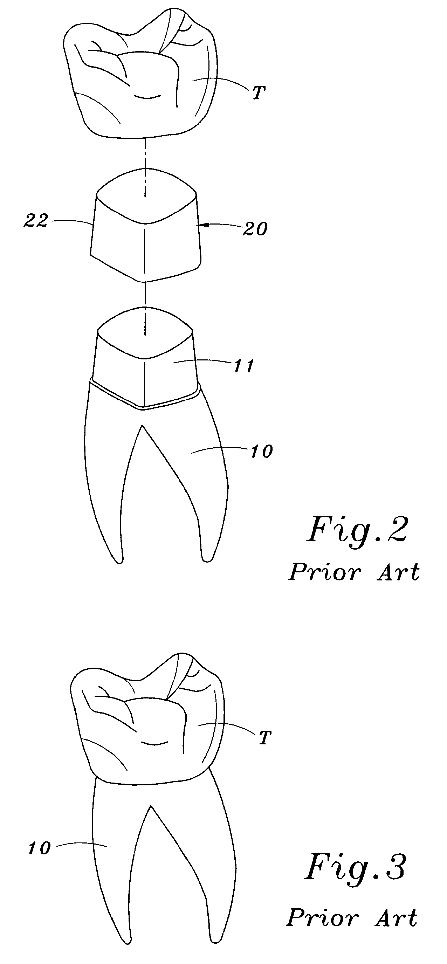

As illustrated in Figs. 1 to 4, a conventional method of mounting a removable restoration tooth T involves the following steps:
(a) mending and forming an abutment 11 on a tooth 10 under dental cure;
(b) making a matrix duplicated from the abutment 11 in step (a);
(c) making an inner crown 20 with hollow construction based on the matrix of abutment 11 in step (b);
(d) making a matrix duplicated from the inner crown 20 in step (c) for preparation of making an outer crown 3 0;
(e) making an outer crown 30 with hollow construction based on the matrix of inner crown 20 in step (d);
(f) making a restoration tooth T with the outer crown 30 in step (e) inside;
(g) having inner crown 20 in step (c) fitted fixedly over the abutment 11 in step (a) in such a way that an inner wall 21 of the inner crown 20 is joined with the abutment 11 in conjunction with a cement C; and
(h) finally, having the outer crown 30 of restoration tooth T in step (f) is removably fitted over an outer wall 22 of the inner crown 20 in step (g). But, It must be noted here that the association of the outer wall 22 of the inner crown 20 and the inner wall 31 of the outer crown 30 of the restoration tooth T takes the form of interference fit.

But the efficiency of the conventional method described above is dependent on the quality of dental works done by a dentist and a dental technician, for example, the formation of the abutment 11 and the making of the matrix of abutment 11 are done by the dentist, the inner crown 20 is made by the dental technician on the basis of the matrix of the abutment 11, and the outer crown 30 of the restoration tooth T is also made by the dental technician.

It is therefore readily apparent that a work done by the dentist is a complement to the dental technician and vice versa. In addition, the making of the inner crown 20 is a time-consuming chore on the part of the dental technician in view of the fact that the inclination of the outer wall 22 of the inner crown 20 is crucial to a successful interference fit between the outer wall 22 of the inner crown 20 and the inner wall 31 of the outer crown 30 of the restoration tooth T.

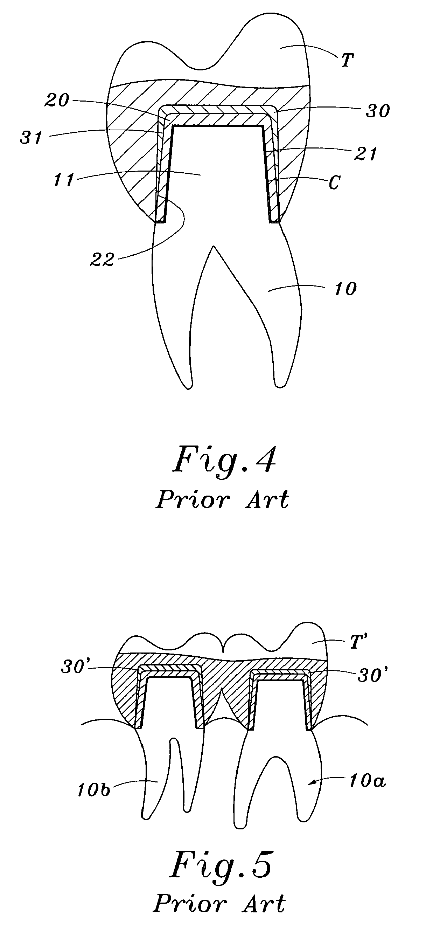

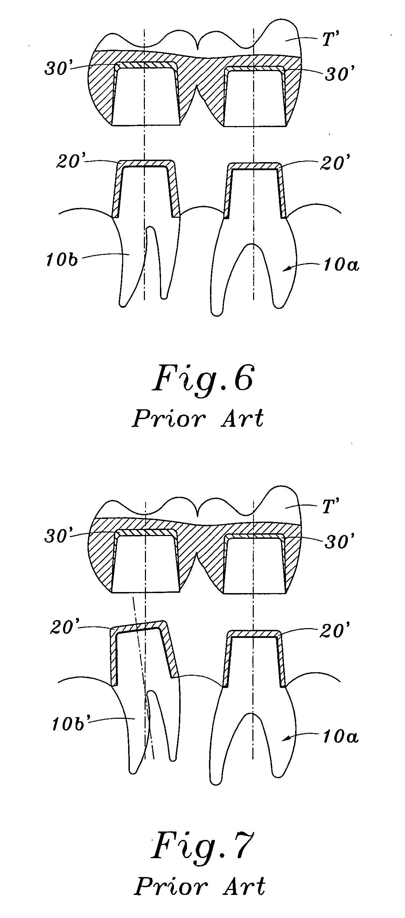

Nevertheless, the conventional method described above has another limitation. As illustrated in Figs. 5 and 6, there are two abutment teeth 10a and 10b mended from two adjoining natural teeth to be restored by a restoration tooth T' having two outer crowns 30', once the restoration tooth T' is joined with the two abutment teeth 10a and 10b, the two outer crowns 30' of restoration tooth T' shall be respectively fitted over the abutments 20' of the two abutment teeth 10a and 10b under the circumstances of center lines of the two abutments 20' being parallel to each other. In the event that the two abutments 20' are not made correctly by a dentist, it is very likely that the center lines of the two abutments 20' are not parallel to each other as illustrated in Fig. 7. As a result, each outer crowns 30' of the restoration tooth T' is not properly fitted over its corresponding abutments 20' of the two abutment teeth 10a and 10b.

### SUMMARY OF THE PRESENT INVENTION

The primary objective of the present invention is to provide a novel method of mounting a removable restoration tooth on a mended natural tooth which is free of the deficiencies of the prior art method described above.

The method of the present invention employs a set of modular inner crown, modular outer crown and modular abutments conformation device. With the help of device units, the formation of abutment on a mended natural tooth is done efficiently and precisely. In addition, the device units are provided with a upright rod by means of which a dentist can easily determine if the center lines of two adjoining abutments are parallel to each other.

The modular inner crown units and corresponding modular outer crown units serve to streamline the process of making the metal inner crowns.

The features and the advantages of the present invention will be more readily understood upon a thoughtful deliberation of the following detailed description of a preferred embodiment of the present invention with reference to the accompanying drawings.

### BRIEF DESCRIPTION OF THE DRAWING FIGURES

Fig. 1, shows a process flow diagram of making a conventional removable restoration tooth of prior art.

Fig. 2 shows an exploded view of a conventional removable restoration tooth of the prior art.

Fig. 3 shows a perspective view of the conventional removable restoration tooth shown in Fig. 2 in combination.

Fig. 4 shows a longitudinal sectional view of the conventional removable restoration tooth shown in Fig. 2 in combination.

Fig. 5 shows a longitudinal sectional view of a conventional removable restoration teeth with two outer crowns side by side mounted on two adjoining abutment teeth.

Fig. 6 shows an exploded sectional view of the conventional removable restoration teeth shown in Fig. 5.

Fig. 7 shows another exploded sectional view of the conventional removable restoration teeth as shown in Fig. 5 due to center line of abutments of two adjoining abutment teeth not parallel each other.

Fig. 8 shows a perspective view of a modular inner crown of the present invention.

Fig. 9 shows a sectional schematic view of the modular inner crown shown in Fig. 8.

Fig. 10 shows a sectional schematic view of a modular outer crown of the present invention.

Fig. 11 shows a sectional schematic view of an abutment conformation device of the present invention.

Fig. 12 shows a schematic view of a holding device used by the dental technician.

Fig. 13 shows a flow chart of the present invention.

Fig. 14 shows a sectional schematic view of a selected abutment conformation device of the present invention.

Fig. 15 shows a schematic view of an abutment tooth mended in relation to the selected abutment conformation device of the present invention.

Fig. 16 shows a schematic view of the making of an abutment matrix of the present invention.

Fig. 17 is a schematic view showing that an engagement portion of the inner crown is held by a chuck of the holding device, and that the inner crown matrix is located on a platform of the holding device.

Fig. 18 shows a schematic view of the dressing of the inner crown of the present invention.

Fig. 19 shows a sectional schematic view of a finished inner crown of the present invention.

Fig. 20 shows a sectional schematic view of a restoration tooth made by using a modular outer crown of the present invention inside.

Fig. 21 shows a sectional schematic view of the restoration tooth of the present invention mounted on the abutment of a natural abutment tooth by combining the modular inner crown and modular outer crown.

### DETAILED DESCRITION OF THE PREFERRED EMBODIMENTS

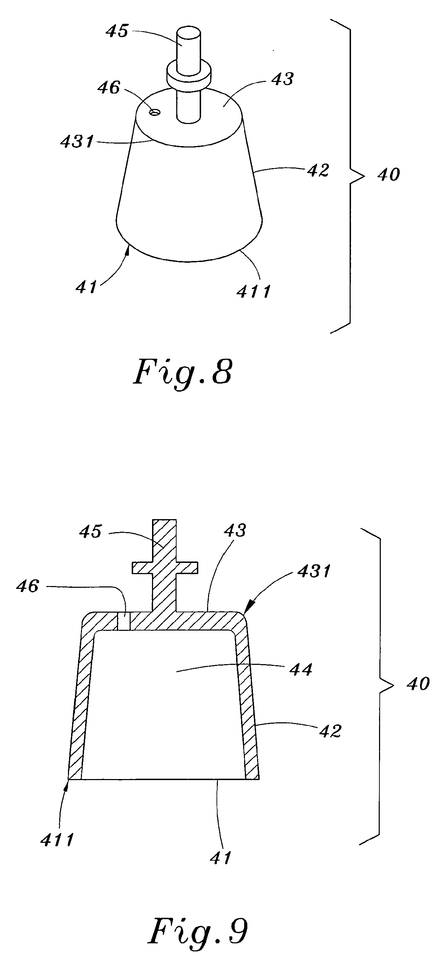

As shown in Figs. 8 and 9, the present invention comprises a set of modular inner crowns 40, which are corresponding in shape and size to the 16 upper teeth and 16 lower teeth of the permanent teeth of a human. The modular inner crowns 40 are integrally made by injection molding. In the event any permanent teeth are to be restored due to decay or deformation, a corresponding modular inner crowns 40 is selected by a dentist for use in the treatment of the diseased or deformed tooth.

The modular inner crowns 40 are of a conical construction, each modular inner crowns 40 has a bottom 41 with a fringe 411, a conical body 42 with a hollow interior 44, and a top 43 with a fringe 431.

The conical body 42 is located between the bottom 41 and the top 43 with the hollow interior 44 extending from the bottom 41 toward the top 43. The top 43 is provided in the center with a cruciform engagement portion 45 and is further provided with a ventilation hole 46 in communication with the hollow interior 44 as shown in Fig. 9. The conical body 42 has an outer wall with an inclination.

And, the hollow interior 44 of modular inner crowns 40 is dimensioned to fit with the abutment mended on a natural abutment tooth.

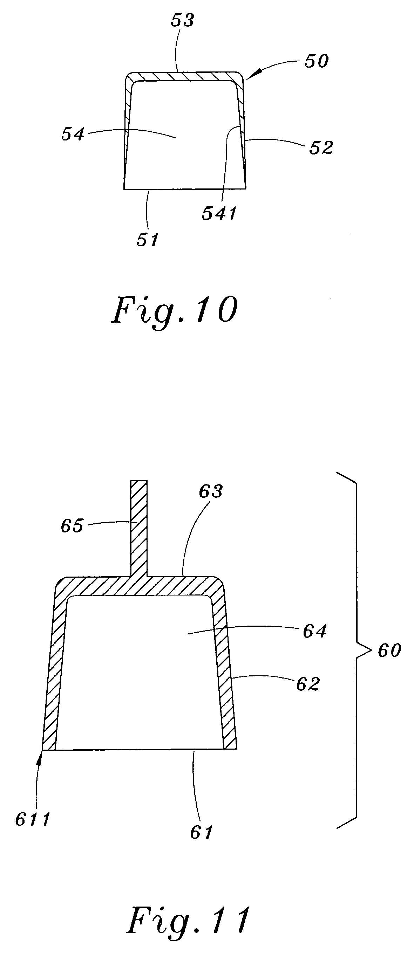

As shown in Fig. 10, the present invention comprises a set of modular outer crowns 50, and each modular outer crowns 50 is made by in conformity with the corresponding modular inner crowns 40.

Each modular outer crowns 50 have a bottom 51, an outer wall 52, a top 53, and a hollow interior 54 extending from the bottom 51 toward the top 53. The hollow interior 54 has an upright inner wall 541 corresponding in inclination to the outer wall of the conical body 42 of corresponding modular inner crowns 40. The outer wall 52 is located between the fringe of the bottom 51 and the fringe of the top 53.

As shown in Fig. 11, the present invention comprises a set of modular abutment conformation devices 60, and each modular abutment conformation devices 60 are in conformity with corresponding modular inner crowns 40.

The modular abutment conformation device 60 is used as references to form abutment of a natural abutment tooth. Each modular abutment conformation devices 60 have a bottom 61, a top 63, an outer wall 62 located between a fringe 611 of the bottom 61 and a fringe of the top 63, and a hollow interior 64 extending from the bottom 61 toward the top 63.

The hollow interior 64 of modular abutment conformation device 60 has a standardized dimension and serves as a guide to form the abutment on a natural abutment tooth, and the top 63 of modular abutment conformation device 60 is provided in the center with a rod 65 extending uprightly therefrom.

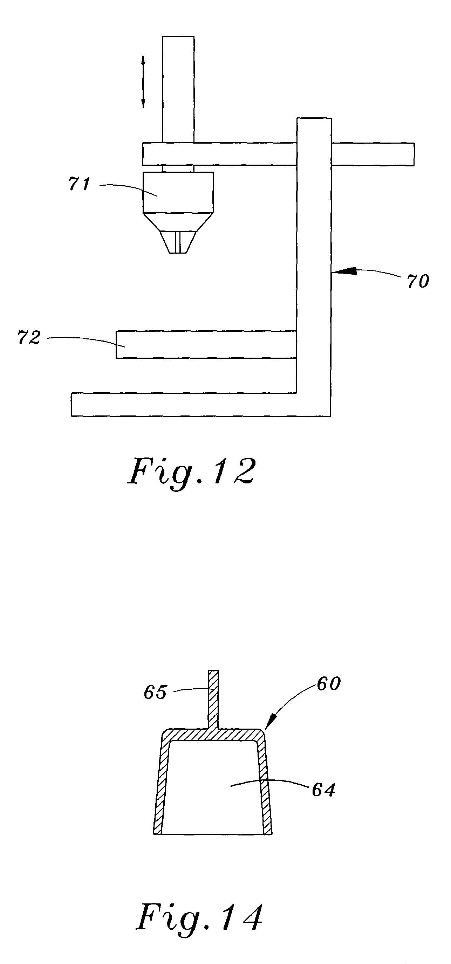

As shown in Fig. 12, a holding device 70 is commonly used by the dental technician to hold a modular inner crown 40 and an abutment matrix M. The holding device 70 comprises a chuck 71 capable of an up-and-down movement, and a platform 72 capable of a horizontal displacement. The chuck 71 is used to hold the engagement portion of the modular inner crowns 40, and the platform 72 is used to hold the abutment matrix M which is made by the dentist.

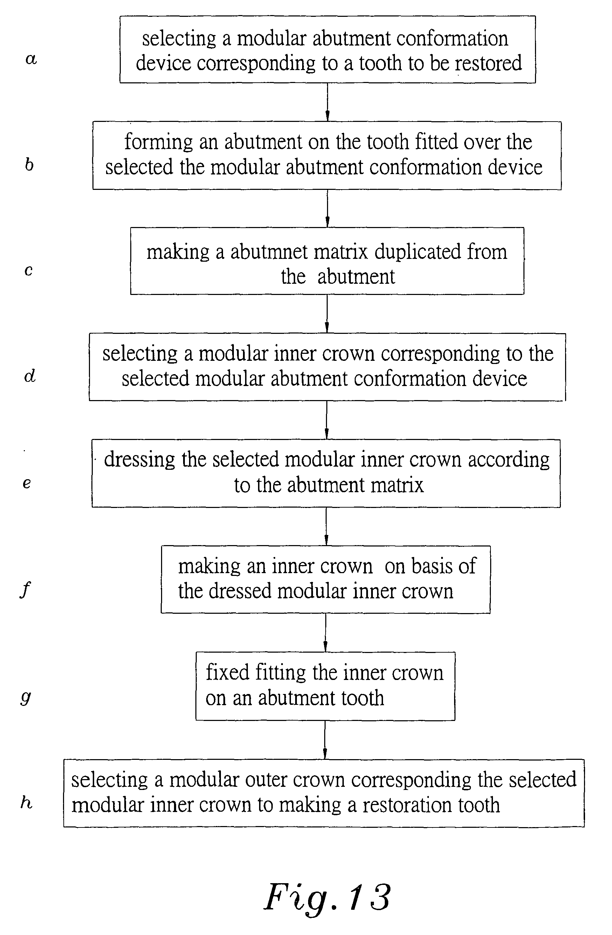

As shown in Figs. 13 to 20, a method of the present invention is used to mount a removable restoration tooth on a natural abutment tooth which is a diseased or decayed tooth and is to be restored by the removable restoration tooth t.

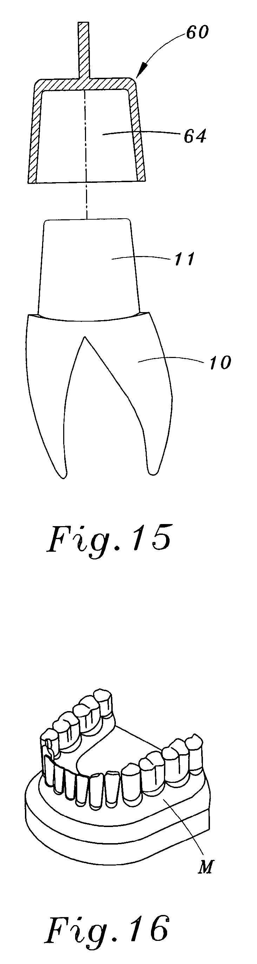

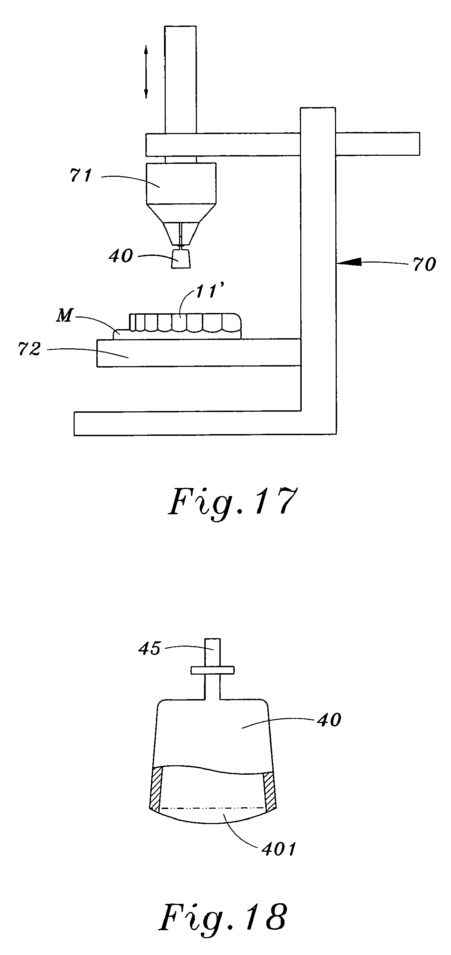

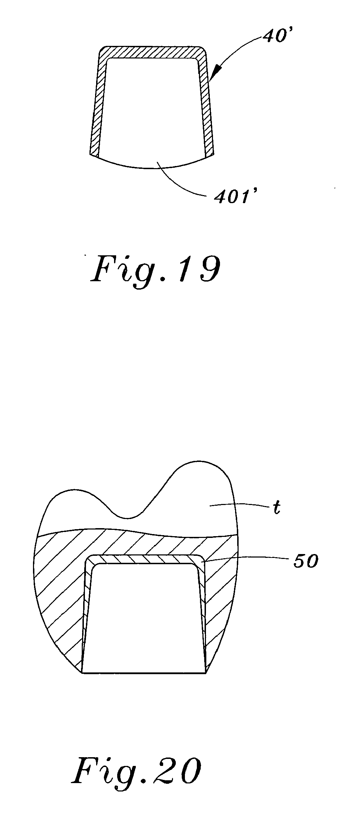

The method of the present invention comprises the following steps:
(a) selecting a corresponding modular abutment conformation device 60 in conformity with a natural tooth 10 to be restored;
(b) forming an abutment 11 on the natural tooth 10 to fit into the hollow interior 64 of selected modular abutment conformation device 60 in step (a) as illustrated in Fig. 15;
(c) making a abutment matrix M duplicated from the abutment 11 in step (b) as shown in Fig. 16;
(d) selecting a modular inner crown 40 corresponding to the selected modular abutment conformation device 60 in step (a);
(e) dressing the selected modular inner crown 40 according to the gum line of the abutment matrix M by fitting the selected modular inner crown 40 in step (d) over the abutment matrix M in step (c);
   This step (e) is completed by having the selected modular inner crown 40 being held by the holding device 70 such that the engagement proton 45 of the selected modular inner crown 40 is held by the chuck 71 of the holding device 70, and having the abutment matrix M duplicated from the abutment 11 is located on the platform 72 of the holding device 70 as illustrated in Fig. 17. By moving the chuck 71 up and down, the selected modular inner crown 40 is fitted with an abutment 11' of the abutment matrix M. In accordance with the shape of the gum line of the matrix; the dressing of a line 401 of the selected modular inner crown 40 is done as illustrated in Fig. 18.
(f) making an inner crown 40' on the basis of the dressed inner crown 40 in the stop (e);
   Accordingly, a metal inner crown 40' is made in such a way that it has a line 401' in conformity with the gum line of the natural abutment tooth 10 as shown in Fig. 19.
(g) mounting fixedly the inner crown 41' on the abutment 11 of the natural tooth 10 to be restored in conjunction with a cement C;
(h) selecting a modular outer crown 50 corresponding the selected modular inner crown 40 in step (d); and further making a removable restoration tooth t by using the selected modular outer crown (50) as shown in Fig. 20.

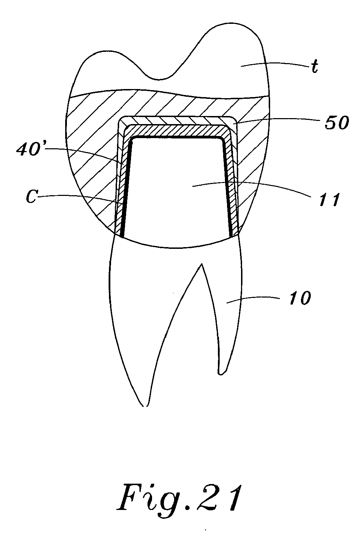

Finally, a natural abutment tooth 10 is restored by the restoration tooth t in such a manner that the modular outer crown 50 is removably fitted over the inner crown 40' as shown in Fig. 21.

With the help of using modular abutment conformation device 60, the formation of the abutment 11 of a natural abutment tooth 10 to be restored is so streamlined as to enhance the efficiency of the dental treatment.

In addition, each t modular abutment conformation devices 60 are provided with an upright rod 65 as shown in Fig. 11, by means of which a dentist can easily observe if the center lines of two adjoining abutments 11 are parallel to each other. As a result, the quality of a dental work done by the dentist is greatly improved.

With the use of modular inner crown 40 and the holding device 70, the efficiency and the precision of dressing modular inner crown 40 are so enhanced that the problem of fitting the modular inner crown 40 with the gum line of a natural abutment tooth 10 is substantially alleviated.

Each modular outer crowns 50 are made in accordance with each corresponding modular inner crown 40. As a result, the method of the present invention eliminates the process of making an inner crown matrix, which is an indispensable step of the prior art method.

The embodiment of the present invention described above is merely illustrative. Accordingly, the present invention may be embodied in other specific forms without deviating from the spirit thereof. The present invention is therefore to be limited only by the scopes of the following claims.

## Claims

1. A method of mounting a removable restoration tooth on a natural tooth to be restored, **characterized in that** comprising the following steps of:
(a) making a set of modular inner crowns (40), and making a set of modular outer crowns (50) and a set of modular abutment conformation devices (60) both corresponding to the set of modular inner crowns;
(b) selecting a corresponding modular abutment conformation device (60) in conformity with a natural tooth (10) to be restored;
(c) forming an abutment (11) on the natural tooth (10) to fit over the selected modular abutment conformation device (60) in step (b);
(d) making an abutment matrix (M) duplicated from the abutment (11) in step (c);
(e) selecting a modular inner crown (40) corresponding the selected modular abutment conformation device (60) in step (b);
(f) dressing the selected modular inner crown (40) according to the gum line of the abutment matrix (M);
(g) making an inner crown (41') on the basis of the dressed modular inner crown (40);
(h) mounting fixedly the inner crown (41') on the abutment (11) of the natural tooth (10) to be restored;
(i) selecting a modular outer crown (50) corresponding the selected modular inner crown (40) in step (e) and further making a removable restoration tooth by using the selected modular outer crown (50).

2. A modular set of making a removable restoration tooth comprising a set of modular inner crowns (40), **characterized in that** each modular inner crown (40) has a conical body (42) provided with a top (43) having an engagement portion (45) thereon, an hollow interior (44) with a receiving space inside, and an outer wall with an inclination thereof.

3. The modular set of making a removable restoration tooth of claim 2, **characterized in that** the top (43) of conical body (42) is provided with a ventilation hole (46) in communication with the hollow interior (44).

4. The modular set of making a removable restoration tooth of claim 2 further comprising a set of modular outer crowns (50) made by corresponding the set of modular inner crown (40), **characterized in that** each modular outer crowns (50) has a top (53), an outer wall (52) and a hollow interior (54) which inner wall corresponding in inclination to the outer wall of conical body (42) of corresponding modular inner crown (40).

5. The modular set of making a removable restoration tooth of claim 2 or 4 further comprising a set of modular abutment conformation devices (60) made by corresponding the set of modular inner crown (40), **characterized in that** each modular abutment conformation device has a top (63), an outer wall (62) and a hollow interior (64) which inner wall in inclination to that of outer wall of conical body (42) of corresponding modular inner crown (40).

6. The modular set of making a removable restoration tooth of claim 5, **characterized in that** on the top (63) of each modular abutment conformation device (60) is provided with an upright rod (65).
